# EUROPEAN PATENT SPECIFICATION

(11) **EP 2 017 615 B1**
(45) Date of publication and mention of the grant of the patent: **22.01.2014**
(21) Application number: 07708254.3
(22) Date of filing: 08.02.2007
(51) Int. Cl.: G01N 30/26, B01D 19/00, G01N 30/88, G01N 30/34, G01N 30/32

(54) **Degasifier and liquid chromatograph equipped therewith**
Entgasungsvorrichtung und damit ausgestatteter Flüssigkeitschromatograph
Dégazeur et chromatographe en phase liquide associé

(30) Priority: 16.02.2006 JP 2006039529
(43) Date of publication of application: 21.01.2009
(73) Proprietor: ARKRAY, Inc., Kyoto-shi, Kyoto 601-8045 (JP)
(72) Inventor: SUGIYAMA, Koji, Kyoto-shi Kyoto 601-8045 (JP); SEZAKI, Akira, Kyoto-shi Kyoto 601-8045 (JP); KAMADA, Takanori, Kyoto-shi Kyoto 601-8045 (JP); HONGO, Yoshikiyo, Koka-shi Shiga 520-3306 (JP)
(74) Representative: HOFFMANN EITLE
(86) International application number: PCT/JP2007/052270
(87) International publication number: WO 2007/094242

(56) References cited:
- EP-A- 0 489 569
- EP-A- 1 078 671
- EP-A- 1 243 310
- EP-A- 1 529 560
- EP-A2- 1 544 437
- WO-A-01/15794
- WO-A-2007/008950
- WO-A-2007/091654
- JP-A- 09 253 642
- JP-A- 11 057 415
- JP-A- 2000 162 100
- JP-A- 2001 141 360
- JP-U- 04 030 004
- US-A- 4 568 648
- US-A- 5 205 844
- US-A1- 2001 002 573
- US-A1- 2006 070 525
- US-B1- 6 315 815

## Description

### TECHNICAL FIELD

The present invention relates to a deaerator, which is configured so as to deaerate a liquid in a liquid distribution space by partitioning the liquid distribution space and a decompression space by a gas permeable film and discharging a gas in the decompression space to the outside by a pump, and to a liquid chromatography apparatus provided with the deaerator.

### BACKGROUND ART

In the case of separating and analyzing a biogenic substance by using a biologic sample such as blood, a high-performance liquid chromatography apparatus (HPLC apparatus) by utilizing a high-performance liquid chromatography (HPLC) has been widely used (for example, refer to Patent Document 1). As shown in Fig. 12, a general HPLC apparatus is configured in such a manner that, adjusting a sample containing a biogenic substance in a sample adjustment unit 90, then, introducing the sample into an analysis column 91, the biogenic substance is absorbed into a column packing of the analysis column 91. On the other hand, the biogenic substance absorbed in the column packing is separated by supplying an eluting solution from an eluting solution bottle 93 to the analysis column 91 by means of a solution sending pump 92. The separated liquid from the analysis column 91 is introduced into a photometric mechanism 94, and by continuously measuring an absorbance of the separated liquid in the photometric mechanism 94, the analysis of the biogenic substance is carried out.

On the other hand, in an HPLC apparatus 9, in order to stably carry out analysis of a biogenic substance, a deaerator 95 is mounted at the upstream of the solution sending pump 92 (for example, refer to Patent Document 2). The deaerator 95 serves to remove gas such as oxygen remaining in the eluting solution. By mounting this deaerator 95 in the HPLC apparatus 9, it is possible to prevent gas dissolved in the eluting solution from being made into air bubbles and to prevent a feed rate of the solution sending pump 92 from being unstable. Therefore, it is possible to stably carry out the analysis of a biogenic substance in the HPLC apparatus 9.

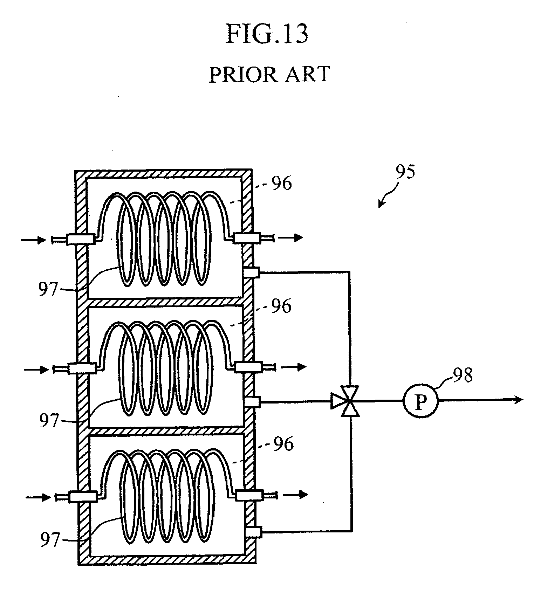

As shown in Fig. 13, as a deaerator 95, there exists one that is configured so as to absorb and remove the dissolved gas in the eluting solution by distributing the eluting solution in a gas permeable tube 97 which is arranged in a decompression space 96, and decompressing the decompression space 96 by means of a pump 98 (for example, refer to Patent Document 3). In other words, the dissolved gas in the eluting solution is moved to the outside of the gas permeable tube 97 (the decompression space 96) when the eluting solution is distributed through the inside of the gas permeable tube 97, to be removed.

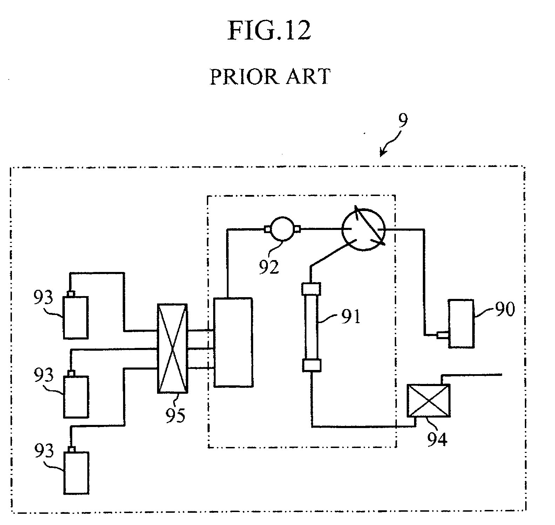

The deaerator 95 having such a configuration is also used for inhibited oxidation or preventing of development of microorganisms in a manufacturing process of food and drinking water or the like other than the HPLC apparatus 9 as shown in Fig. 12.

[Patent Document 1] Japanese Patent Application Laid-Open No. 7-120447
[Patent Document 2] Japanese Patent Application Laid-Open No. 2001-133445
[Patent Document 3] Japanese Patent Application Laid-Open No. 2000-25C5229

EP 1 078 671 discloses a flow-through vacuum degassing unit for degassing a liquid including a vacuum chamber adapted to be connected to a source for creating a vacuum in the chamber, an inlet and an outlet connection for admitting and discharging liquid to be degassed, a tube for conducting the liquid through the chamber, wherein the tube is a gas-permeable polymeric resin material and a control circuit for operating the source of creating a vacuum in the chamber responsive to a sense vacuum level in the chamber.

JP 2000-162100 A discloses a liquid deaerating apparatus comprising a liquid which contains a dissolved gas and which is passed through respective tubes, that are arranged and installed in a decompression chamber and which are formed of a blank which permeates gas molecules but which does not permeate liquid molecules, and the dissolved gas is removed from a liquid. A leak hole which is used to introduce a gas into the inside of the chamber is formed in the wall of the chamber and a resistance tube that is used to leak the gas is attached to the leak hole which is formed in the wall of the chamber.

WO 2007/008950 discloses an apparatus for removing gas bubbles form a fluid including a fluid inlet and a separation chamber that is in fluid communication with the fluid inlet. The separation chamber has first and second end portions, with the first end portion being operably oriented gravitationally above the second end portion. The apparatus further includes a first gas permeable liquid impermeable membrane disposed in the separation chamber and extending substantially along a first axis defined as extending between the first and second end portions. A permeate side of the membrane is exposed to an environment having a second partial pressure of target gas, which second partial pressure is lower than a first partial pressure of the gas in the fluid.

EP 1 529 560 A discloses a vacuum control system for allowing a degree of vacuum in a vacuum vessel to be kept constant. The vacuum control system controls the rotary power of a motor 3, continuously controls displacement of a vacuum pump and thus keeps the degree of vacuum in a vacuum vessel constant by decompressing the inside of the vacuum vessel using an exhaust vacuum pump which operates with the motor, monitoring the inside pressure of the vacuum vessel using a pressure sensor and controlling a voltage applied to the motor on the basis of an output signal resulting from measurement of the inside pressure of the vacuum vessel by the pressure sensor.

US 5,205,844 discloses a degassing apparatus in which a tube made of permeable film is laid in a vacuum chamber which is decompressed and controlled by a vacuum pump, and a liquid flowing in the tube is degassed by causing gas to permeate through the wall of the tube. The degassing apparatus comprises a valve for opening the vacuum chamber toward the atmosphere and/or a permeable film which is placed between the vacuum chamber and the atmosphere and/or a valve for opening the vacuum pump to the atmosphere which is disclosed between the primary valve and the primary cylinder of the vacuum pump. Furthermore, the degassing apparatus comprises a controller which is utilized to regulate the coordination of the air exposure valve and the vacuum pump by means of signal of a vacuum gauge. The vacuum gauge senses the deterioration of the degree of vacuum due to the permeating gas when it occurs and the controller again acts upon the vacuum pump to regulate the pressure within the chamber by opening or closing the air exposure valve.

The features of the preamble of the independent claim are known from US 6,315,815 B1, EP 1 544 437 A2 and US 4,568,648 A.

### DISCLOSURE OF THE INVENTION

### PROBLEMS TO BE SOLVED BY THE INVENTION

However, in the deaerator 95, upon carrying out deaeration of an eluting solution continuously, a partial pressure of deaeration gas component in a decompression space 96 is gradually made higher due to an influence of the gas, which is degassed from the eluting solution. Particularly, in a case of using one made of a silicon resin as a gas permeable tube 97, a silicon resin has a property to easily transmit oxygen therethrough than nitrogen, so that the partial pressure of oxygen in the decompression space 96 is easily increased. Then, in a case that the partial pressure of the deaeration gas in the decompression space 96 is increased, the amount of a gas, which can be moved from the elution solution in the gas permeable tube 97 into the decompression space 96, becomes small. Therefore, in the deaerator 95, in a case that deaeration of the elution solution is continuously carried out, a deaeration property is lowered with increase of the partial pressure of the deaeration gas, so that an expected purpose to use the deaerator 95 cannot be achieved sufficiently.

In addition, when the deaerator 95 is stopped, due to fear of concentration of the elution solution in the gas permeable tube 97, the decompression space 96 is opened to air. In this case, although the partial pressure of gas is identical with that of air at a beginning of driving of the deaerator 95, as described above, the partial pressure of the deaeration gas component in the decompression space 96 becomes higher due to continuous deaeration of the elution solution. Therefore, at beginning of driving of the deaerator 95 and after the deaerator 95 has been driven for a predetermined time, the amount of dissolved gas component contained in the elution solution (for example, the amount of the dissolved oxygen) becomes different. As a result, a deviation is caused in measurement values in the sample to be analyzed at beginning of driving of the deaerator 95 and the sample to be analyzed after driving the deaerator 95 for a predetermine time, so that a degree of accuracy in the measurement may be deteriorated.

For example, in the HPLC apparatus 9 for measuring a density of glycohemoglobin in a blood sample, glycohemoglobin is compassed as a ratio of glycohemoglobin in the total amount of hemoglobin, however, it is feared that the degree of accuracy in the measurement is deteriorated since hemoglobin includes oxyhemoglobin and deoxyhemoglobin. In other words, in the case that the amount of the dissolved oxygen in the elution solution is varied by the performance of the deaerator 95, a ratio between oxyhemoglobin and deoxyhemoglobin in the hemoglobin is varied. On the other hand, in the HPLC apparatus 9, diluting the blood sample and introducing the sample having relatively much oxygen into the analysis column 91, so that a photometric mechanism 92 uses a wavelength of 415nm, which is the longest absorption wavelength of oxyhemoglobin as a measurement wavelength. Therefore, in the case that the ratio between oxyhemoglobin and deoxyhemoglobin is varied, it becomes difficult to accurately measure a density of glycohemoglobin due to the longest absorption wavelength of oxyhemoglobin.

### MEANS FOR SOLVING THE PROBLEM

An object of the present invention is to appropriately prevent a bad influence to be given by deterioration of a deaeration performance of a deaerator when using the deaerator continuously, for example, to appropriately prevent deterioration of a degree of accuracy in measurement of a liquid chromatography apparatus.

According to the invention, the object is achieved by a deaerator as defined in claim 1. Further preferred embodiments are defined in the dependent claims.

The oxygen partial pressure variation control means is configured so as to introduce a gas in the exterior of the deaerator into the decompression space during deaeration. Further, the oxygen partial pressure variation control means has a high-pressure drop part for increasing transfer resistance of the gas to be introduced in the decompression space. Further, the high-pressure drop part includes a porous filter. The oxygen partial pressure variation control means may further comprise an external air introduction port to communicate the decompression space with the outside of the deaerator, and an external air introduction pipe, which is connected to the external air introduction port. In this case, the high-pressure drop part is mounted in the middle or the end portion of the external air introduction pipe, for example. The high-pressure drop part may be mounted in the external air introduction port omitting the external air introduction pipe.

In addition, adopting a resistance tube (a pipe having a minute inner diameter (for example, Φ 0.1 to 0.2 mm) formed in a spiral shape) as the external air introduction pipe, the external air introduction pipe itself may be used as a high-pressure drop part. In addition, by forming a part of the pipe for introduction of external air by a resistance tube, the resistance tube can be also used as the high-pressure drop part.

The oxygen partial pressure variation control means may have an oxygen partial pressure detecting part for monitoring a partial pressure of oxygen of the decompression space, and a valve, which is mounted in the middle of the external air introduction pipe; and the oxygen partial pressure variation control means can be also configured so as to control an opening and closing state of the valve based on a monitoring result by the oxygen partial pressure detecting part.

### BRIEF DESCRIPTION OF THE DRAWINGS

Fig. 1 is a schematic block diagram of an HPLC apparatus according to a first embodiment of the present invention.
Fig. 2 is a sectional view schematically showing a part for explaining a deaerator of the HPLC apparatus shown in Fig. 1.
Fig. 3 is a sectional view for explaining a photometric unit in the HPLC apparatus shown in Fig. 1.
Fig. 4 is a sectional viewcorresponding to Fig. 2 for explaining a deaerator according to a second embodiment of the present invention.
Fig. 5 is a sectional view corresponding to Fig. 2 for explaining a deaerator according to a third embodiment of the present invention.
Fig. 6 is a sectional view corresponding to Fig. 2 for explaining a deaerator according to a fourth embodiment of the present invention.
Fig. 7 is a sectional view corresponding to Fig. 2 for explaining a deaerator according to a fifth embodiment of the present invention.
Fig. 8 is a sectional view corresponding to Fig. 2 for explaining a deaerator according to a sixth embodiment of the present invention.
Fig. 9 is a sectional view corresponding to Fig. 2 for explaining a deaerator according to a seventh embodiment of the present invention.
Fig. 10 is a sectional view corresponding to Fig. 2 for explaining a deaerator according to an eighth embodiment of the present invention.
Fig. 11 is a graph showing a measurement result of a density of glycohemoglobin according to a first example and a first comparative example;
Fig. 12 is a schematic block diagram showing an example of a conventional HPLC apparatus (a high-performance liquid chromatography apparatus).
Fig. 13 is a sectional view schematically showing a part of the HPLC apparatus shown in Fig. 12 for explaining a deaerator in the HPLC apparatus shown in Fig. 12.

### EXPLANATION OF SYMBOLS

X: HPLC apparatus (liquid chromatography apparatus)
10, 11, 12: Eluting solution bottle (eluting solution holding part)
14: Blood sample
2, 7A, 7B, 7C, 7D, 7E, 7F, 7G: Deaerator
21A, 21B, 21C: Gas permeable tube (gas permeable film)
22: Decompression pump
23, 23A, 23B, 23C, 23A', 23B', 23C': High-pressure drop part
23b: Filter (of high-pressure drop part)
25A, 25B, 25C: Decompression space
25Aa, 25Ba, 25Ca: Discharge port
25Ab, 25Bb, 25Cb: Air introduction port (external air introduction port)
26A, 26B, 26C: Oxygen density measuring sensor (equivalent to oxygen partial pressure measuring part)
27A, 27B, 27C, 270: Exhaust pipe
271: Detection pipe (branch pipe)
274: Discharge sub-chamber
275: Return pipe
276: Valve
28A, 28B, 28C: Air introduction pipe
29A, 29B, 29C: Valve
40: Analysis column

### BEST MODE FOR CARRYING OUT THE INVENTION

Hereinafter, first to eighth embodiments of the present invention will be described with reference to the drawings.

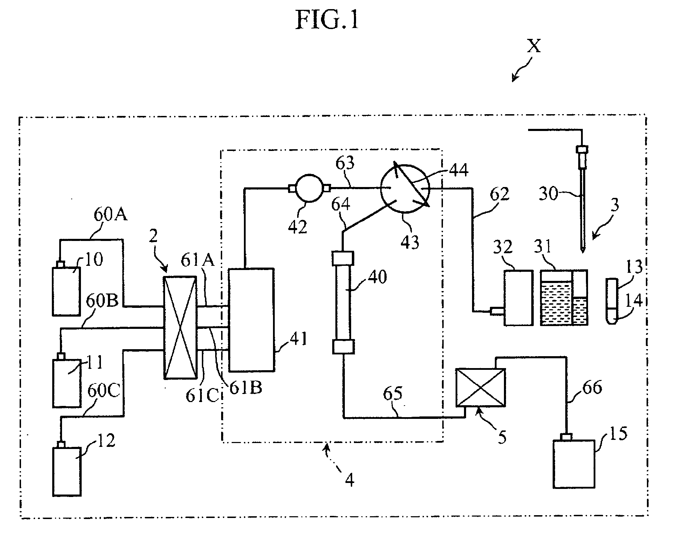

At first, the first embodiment of the present invention will be described with reference to Figs. 1 to 3.

An HPLC apparatus X shown in Fig.1 is configured so as to measure a density of glycohemoglobin by using a whole blood, and this HPLC apparatus X is provided with a plurality of eluting solution bottles 10, 11, and 12 (three in the drawing), a deaerator 2, a sample adjusting unit 3, an analysis unit 4, and a photometric unit 5.

Respective eluting solution bottles 10, 11, and 12 hold an eluting solution to be supplied to an analysis column 40 to be described later. As the eluting solution, buffers having different pH and salt concentrations are used, for example.

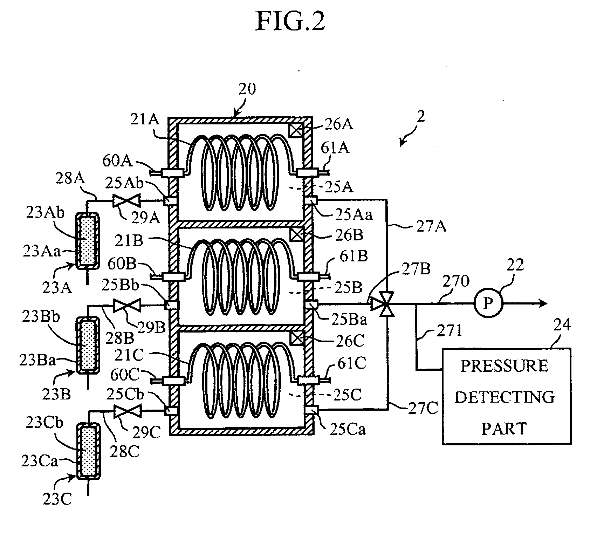

The deaerator 2 serves to remove a dissolved gas from the eluting solution before supplying the eluting solution to the analysis unit 4 (the analysis column 40), and the deaerator 2 is connected to the eluting solution bottles 10, 11, and 12 via pipes 60A, 60B, and 60C and is connected to a manifold 41 of the analysis unit 4 via pipes 61A, 61B, and 61C. As shown in Fig. 2, the deaerator 2 has a chamber 20, a plurality of gas permeable tubes 21A, 21B, and 21C (three in the drawing), a decompression pump 22, a plurality of high-pressure drop parts 23A, 23B, and 23C (three in the drawing), and a pressure detecting part 24.

The chamber 20 serves to define a plurality of decompression spaces 25A, 25B, and 25C (three in the drawing), and contain the gas permeable tubes 21A, 21B, and 21C.

In the decompression spaces 25A, 25B, and 25C, oxygen density measuring sensors 26A, 26B, and 26C are arranged, and discharge ports 25Aa, 25Ba, and 25Ca and air introduction ports 25Ab, 25Bb, and 25Cb are provided.

Oxygen density measuring sensor 26A, 26B, and 26C serve to measure a density of oxygen in the decompression spaces 25A, 25B, and 25C. By measuring the density of oxygen in the decompression spaces 25A, 25B, and 25C by these oxygen density measuring sensor 26A, 26B, and 26C, it becomes possible to grasp a partial pressure of oxygen in the decompression spaces 25A, 25B, and 25C. As the oxygen density measuring sensor 26A, 26B, and 26C, various publicly known sensors can be used.

Discharge ports 25Aa, 25Ba, and 25Ca serve to discharge the gas of the decompression spaces 25A, 25B, and 25C to the outside, and the discharge ports 25Aa, 25Ba, and 25Ca are connected to the decompression pump 22 via exhaust pipes 27A, 27B, 27C, and 270.

Air introduction ports 25Ab, 25Bb, and 25Cb serve to introduce air into the decompression spaces 25A, 25B, and 25C, and air introduction pipes 28A, 28B, and 28C are connected to these air introduction ports 25Ab, 25Bb, and 25Cb. In the middle of the air introduction pipes 28A, 28B, and 28C, valves 29A, 29B, and 29C are provided. The valves 29A, 29B, and 29C serve to select a state where air is introduced into the decompression spaces 25A, 25B, and 25C and a state where air is not introduced into the decompression spaces 25A, 25B, and 25C, and open and close of the air introduction ports 25Ab, 25Bb, and 25Cb are controlled by control means (not illustrated).

A plurality of high-pressure drop parts 23A, 23B, and 23C serve to absorb a difference between an air pressure and the pressures of the decompression spaces 25A, 25B, and 25C. In other words, when releasing the valves 29A, 29B, and 29C, the high-pressure drop parts 23A, 23B, and 23C prevent air from being rapidly introduced into the decompression spaces 25A, 25B, and 25C so as to play a roll in order to gradually heighten the pressures of the decompression spaces 25A, 25B, and 25C by gradually introducing air to the decompression spaces 25A, 25B, and 25C. These high-pressure drop parts 23A, 23B, and 23C have configurations to contain filters 23Ab, 23Bb, and 23Cb within sealed holders 23Aa, 23Ba, and 23Ca.

The sealed holders 23Aa, 23Ba, and 23Ca are formed in a hollow shape, and the interior parts thereof are communicated with air and the air introduction pipes 28A, 28B, and 28C. The filters 23Ab, 23Bb, and 23Cb serve to give resistance to a fluid when introducing air into the decompression spaces 25A, 25B, and 25C. These filters 23Ab, 23Bb, and 23Cb are formed by a porous body with a pore diameter 10 to 150 µm, for example. As a porous body in this case, various publicly known ones can be used if targeted fluid resistance can be given.

A pressure detecting part 24 serves to monitor a pressure (a degree of decompression) of each of the decompression spaces 25A, 25B, and 25C, and the pressure detecting part 24 is communicated with an exhaust pipe 270 via a detection pipe 271, which is branched from the middle of the exhaust pipe 270, and further, is communicated with the decompression spaces 25A, 25B, and 25C.

The gas permeable tubes 21A, 21B, and 21C serve to distribute the eluting solution therein and serve to transmit the dissolved gas in the eluting solution therethrough, and the gas permeable tubes 21A, 21B, and 21C are formed in a hollow shape by a publicly-known gas permeable made of a silicon rein or polytetrafluoroethylene. These gas permeable tubes 21A, 21B, and 21C are formed in a spiral shape so that a length of a flow channel within each of the decompression spaces 25A, 25B, and 25C is kept long, and these gas permeable tubes 21A, 21B, and 21C are configured so as to maintain a detention time of the eluting solution in the decompression spaces 25A, 25B, and 25C long while maintaining contact areas to a gas in the decompression spaces 25A, 25B, and 25C large.

The decompression pump 22 serves to discharge the gas of each of the decompression spaces 25A, 25B, and 25C via the exhaust pipes 27A, 27B, 27C, and 270 so as to decompress the decompression spaces 25A, 25B, and 25C. Turning-on and off of this decompression pump 22 is controlled by the control means (not illustrated). This control means controls turning on and off of the decompression pump 22 depending on whether the deaerator 2 is driven or not, for example, and even when the deaerator 2 is driven, the control means controls turning on and off of the decompression pump 22 when the pressure detecting part 24 detects that the pressure (the degree of decompression) of each of the decompression spaces 25A, 25B, and 25C is deviated from a range of a predetermined value.

As shown in Fig. 1, the sample adjustment unit 3 serves to adjust the sample to be introduced from a component of a blood cell collected from the blood collection tube 13 into an analysis column 40. This sample adjustment unit 3 has a sampling nozzle 30, an adjustment solution tank 31, and a diluting tank 32.

The sampling nozzle 30 serves to collect various kinds of liquids including a blood sample 14 of the blood collection tube 13, and the sampling nozzle 30 can absorb and discharge the liquid and can be moved vertically and horizontally. The operation of this sampling nozzle 30 is controlled by the control means (not illustrated).

The adjustment solution tank 31 holds an adjustment solution for adjusting the sample for introduction to be introduced into the analysis column 40 based on the blood sample 14. In this adjustment solution tank 31, as an adjustment solution, a hemolytic solution for hemolyzing a red blood cell and a dilute solution for diluting the hemolytic solution or the like are held.

The diluting tank 32 serves to hemolyze the red blood cell in the blood sample 14, and provides a field for adjusting the sample for introduction by diluting the hemolytic solution. This diluting tank 32 is connected to an injection valve 43 in the analysis unit 4 to be described later via a pipe 62, and the diluting tank 32 is configured so as to be capable of introducing the sample for introduction, which is adjusted in the diluting tank 32, into the analysis column 40 via the injection valve 43.

The analysis unit 4 serves to control absorption and desorption of a biogenic substance for a column packing of the analysis column 40 and provide various biogenic substances to the photometric unit 5, and the temperature of the analysis unit 4 is controlled by a temperature adjusting mechanism (not illustrated). A preset temperature in the analysis unit 4 is determined to be about 40 °C, for example. The analysis column 40 holds the column package for selectively absorbing the hemoglobin in the sample. As a column package, for example, a methacrylate ester copolymer is utilized.

The analysis unit 4 has a manifold 41, a solution sending pump 42, and an injection valve 43 other than the analysis column 40.

The manifold 41 serves to selectively supply the eluting solution to the injection valve 43 from specific eluting solution bottles 10, 11, and 12 among a plurality of the eluting solution bottles 10, 11, and 12. This manifold 41 is connected to the decompression spaces 25A, 25B, and 25C of the deaerator 2 (the gas permeable tubes 21A, 21B, and 21C) via the pipes 61A, 61B, and 61C, and is connected to the injection valve 43 via a pipe 63.

The solution sending pump 42 serves to give a power for moving the eluting solution to the injection valve 43, and is provided in the middle of the pipe 63. The solution sending pump 42 is operated so that a feed rate of the eluting solution is in the range of 1.0 to 2.0 ml/min.

The injection valve 43 collects a predetermined amount of the sample for introduction and enables to introduce the sample for introduction into the analysis column 40, and the injection valve 43 is provided with a plurality of introduction ports and discharge ports (their illustrations are omitted). An injection loop 44 is connected to this injection valve 43. This injection loop 44 can hold a predetermine amount (for example, several µL) of liquid, and by accordingly switching the injection valve 43, it is possible to select the state such that the injection loop 44 is communicated with the diluting tank 32 and the sample for introduction is supplied from the diluting tank 32 to the injection loop 44, the state such that the injection loop 44 is communicated with the analysis column 40 via the pipe 64 and the sample for introduction is introduced from the injection loop 44 to the analysis column 40, or the state such that a cleaning fluid is supplied from a cleaning tank (not illustrated) to the injection loop 44. As such an injection valve 43, for example, a hexagonal valve can be used.

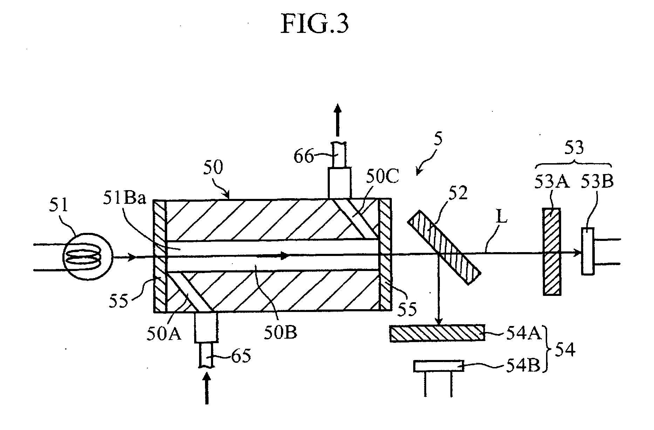

As shown in Fig. 3, the photometric unit 5 can optically detect hemoglobin contained in a desorption solution from the analysis column 40, and the photometric unit 5 has a photometric cell 50, a light source 51, a beam splitter 52, a light receiving system for measurement 53, and a light receiving system for reference 54.

The photometric cell 50 serves to define the photometric area. This photometric cell 50 has an introduction flow channel 50A, a photometric flow channel 50B, and a discharge flow channel 50C, and these flow channels 50A, 50B, and 50C are communicated with each other in sequence. The introduction flow channel 50A serves to introduce the separated liquid from the analysis column 40 (see Fig. 2) into the photometric flow channel 50B to be connected to the analysis column 40 via the pipe 65. The photometric flow channel 50B allows the separated liquid, which is an target of photometry, to be distributed, and provides a field where the separated liquid is photometrically measured, and the photometric flow channel 50B is linearly formed. This photometric flow channel 50B has the released opposite ends and the opposite end portions, which are covered with a transparent cover 55. The discharge flow channel 50C serves to discharge the separated liquid of the photometric flow channel 50B, and the discharge flow channel 50C is connected to a waste fluid tank 15 via the pipe 66 (see Fig. 2).

A light source 51 serves to irradiate the separated liquid with the light, which is distributed through the photometric flow channel 50B. This light source 51 is arranged facing to an end face 50Ba (the transparent cover 55) of the photometric flow channel 50B so that an optical shaft L passes through a center of the photometric flow channel 50B. As the light source 51, one that can emit light in the range of a wavelength including light in a wavelength 415 nm, which is the longest absorption wavelength of oxyhemoglobin, and a reference wavelength 500 nm, for example, a halogen lamp is utilized. It is obvious that, as the light source 51, other than the halogen lamp, for example, one, which is provided with one or a plurality of LED devices, can be also used.

A beam splitter 52 serves to divide the light that transmits through the photometric flow channel 50B among the lights emitted from the light source 51 and allow the divided lights to enter the light receiving system for measurement 53 and the light receiving system for reference 54, and on the optical shaft L, the beam splitter 52 is arranged being inclined at 45 degrees. As the beam splitter 52, various publicly known devices such as a half mirror can be used.

The light receiving system for measurement 53 serves to selectively receive the light of 415 nm, which is the longest absorption wavelength of oxyhemoglobin, among the lights transmitted through the beam splitter 52, and is arranged on the optical shaft L. This light receiving system for measurement 53 is provided with an interference filter 53A for selectively transmitting the light of 415 nm and a light receiving device 53B for receiving the light transmitted through the interference filter 53A. As the light receiving device 53B, a photo diode can be used.

The light receiving system for reference 54 selectively receives the light of 500 nm, which is a reference wavelength, among the lights, of which light paths are changed being reflected in the beam splitter 52. This light receiving system for reference 54 is provided with an interference filter 54A for selectively transmitting the light of 500 nm and a light receiving device 54B for receiving the light transmitted through the interference filter 54A. As the light receiving device 54B, a photo diode can be used.

Next, the operation of the HPLC apparatus X will be described.

In a case where the instruction to start the measurement is confirmed, the HPLC apparatus X collects the blood sample 14 from the blood collection tube 13. The instruction to start the measurement is effected when a user operates a predetermined operational button of the HPLC apparatus X (its illustration is omitted). On the other hand, collection of the blood sample 14 from the blood collection tube 13 is carried out by operating the sampling nozzle 30.

The blood sample 14 that is collected by the sampling nozzle 30 is supplied to the diluting tank 32 by operating the sampling nozzle 30. Further, a hemolytic agent and a dilute solution are supplied from the adjustment solution tank 31 to the diluting tank 32 in sequence, and by mixing a liquid in the diluting tank 32 due to pipette treatment using the sampling nozzle 30, the sample for introduction is adjusted.

Further, in the HPLC apparatus X, in the case where the instruction to start the measurement is confirmed, the eluting solution is supplied to the injection valve 43. The eluting solution is supplied from the eluting solution bottles 10, 11, and 12 to the injection valve 43 via the deaerator 2 and the manifold 41 due to a power of the solution sending pump 42. In addition, from which eluting solution bottles 10, 11, and 12 among a plurality of eluting solution bottles 10, 11, and 12 the eluting solutions are supplied is selected by controlling the manifold 41.

In the deaerator 2, the eluting solution is distributed through the gas permeable tubes 21A, 21B, and 21C within the decompression spaces 25A, 25B, and 25C, and then, the eluting solution is discharged from the gas permeable tubes 21A, 21B, and 21C. In this case, the gas permeable tubes 21A, 21B, and 21C are formed by a material having high gas permeability, and the decompression spaces 25A, 25B, and 25C are decompressed by the decompression pump 22, so that during distribution of the eluting solution through the gas permeable tubes 21A, 21B, and 21C, the dissolved gas containing the dissolved oxygen is removed from the eluting solution.

In the deaerator 2, the densities of oxygen in the decompression spaces 25A, 25B, and 25C are monitored by the oxygen density measuring sensors 26A, 26B, and 26C. Monitoring of the density of oxygen by the oxygen density measuring sensors 26A, 26B, and 26C may be continuously carried out or may be intermittently carried out. In the case of intermittently monitoring the density of oxygen, timing of measuring the density of oxygen is per predetermined time that is determined in advance or every time measurement of the predetermined number of blood samples is completed.

The monitoring results by these oxygen density measuring sensors 26A, 26B, and 26C are outputted to the control means (not illustrated), and by this control means, opening and closing are made individually per each of valves 29A, 29B, and 29C.

More specifically, for example, in a case that the measurement results of the density of oxygen by the oxygen density measuring sensors 26A, 26B, and 26C are higher than a first threshold that has been decided in advance (for example, as a density of oxygen, equivalent to approximately 40% by volume), the valves 29A, 29B, and 29C corresponding to the decompression spaces 25A, 25B, and 25C exceeding the first threshold are released. Thereby, into the decompression spaces 25A, 25B, and 25C, air is introduced via the air introduction pipes 28A, 28B, and 28C, and the air introduction ports 25b, 25Bb, and 25Cb. In this case, since the high-pressure drop parts 23A, 23B, and 23C are provided in the middle of the air introduction pipes 28A, 28B, and 28, air is gradually introduced into the decompression spaces 25A, 25B, and 25C, and pressures of the decompression spaces 25A, 25B, and 25C are gradually increased. As a result, the partial pressures of oxygen in the decompression spaces 25A, 25B, and 25C are gradually decreased due to introduction of air.

On the other hand, in the case that the density of oxygen is lower than a second threshold that has been decided in advance (for example, as a density of oxygen, equivalent to approximately 20% by volume), the valves 29A, 29B, and 29C are closed. Such closing of the valves 29A, 29B, and 29C may be equally carried out after a predetermined time passed from release of the valves 29A, 29B, and 29C despite the measurement results of the densities of oxygen by the oxygen density measuring sensors 26A, 26B, and 26C.

In the case of controlling opening and closing of the valves 29A, 29B, and 29C in this way, it is possible to maintain the partial pressures of oxygen in the decompression spaces 25A, 25B, and 25C in a predetermined range, for example, between the first threshold and the second threshold. Therefore, it cannot be said that, the more the partial pressures of oxygen in the decompression spaces 25A, 25B, and 25C exceed the first threshold, the partial pressures of oxygen in the decompression spaces 25A, 25B, and 25C are increased unduly. As a result, in the deaerator 2, it is possible to prevent the amount of gas such as oxygen, which can be moved from the eluting solution within the gas permeable tubes 21A, 21B, and 21C to the decompression spaces 25A, 25B, and 25C from being decreased. Therefore, in the deaerator 2, even if deaeration of the eluting solution is continuously carried out, it is possible to prevent a deaeration performance from being lowered due to increase of the partial pressure of the deaeration gas such as oxygen. In addition, if the partial pressures of oxygen in the decompression spaces 25A, 25B, and 25C can be maintained in a predetermined range, preventing a dispersion in a degree of deaeration of the eluting solution (dispersion in the amount of the dissolved oxygen) from being generated, a composition of a dissolved gas such as a density of a dissolved oxygen in the eluting solution can be uniformed.

Particularly, if air is gradually introduced in the decompression spaces 25A, 25B, and 25C providing the high-pressure drop parts 23A, 23B, and 23C, it is possible to maintain the partial pressures of oxygen in the decompression spaces 25A, 25B, and 25C in a predetermined range more reliably and more simply. In the case of providing the high-pressure drop parts 23A, 23B, and 23C, making a difference between the first threshold and the second threshold, which are control target values of the partial pressure of oxygen, smaller, a variation in the partial pressure of oxygen can be limited in a smaller range.

The eluting solution discharged from the decompression spaces 25A, 25B, and 25C (the gas permeable tubes 21A, 21B, and 21C) is supplied to the manifold 41 via the pipes 61A, 61B, and 61C, and then, the eluting solution is introduced in the injection valve 43 via the pipe 64.

The eluting solution supplied to the injection valve 43 is supplied to the analysis column 40 via the pipe 65. On the other hand, by carrying out the switching operation of the injection valve 43, the sample for introduction of the injection loop 44 is introduced into the analysis column 40 together with the eluting solution. In the case that a predetermined time has passed from start of introduction of the sample for introduction, by carrying out the switching operation of the injection valve 43, the eluting solution is continuously supplied to the analysis column 40, and at the same time, the injection loop 44 is cleaned. On the other hand, at the same time as cleaning of the injection loop 44 and as well as the formally-described way, the sample for introduction is adjusted from the blood sample 14 of the blood collection tube 13, which is different from the formally -described one, and after cleaning of the injection loop 44, the sample for introduction is introduced again into the injection loop 44. Such adjustment, introduction, and cleaning of the sample for introduction are repeatedly carried out in response to the number of the blood collection tube 13 (the blood sample 14), which is a target of measurement, while accordingly switching the injection valve 43.

On the other hand, in the analysis column 40, when the sample for introduction is introduced, glycohemoglobin is absorbed to the column package. After absorbing glycohemoglobin to the column package, accordingly switching the kind of the eluting solution to be supplied to the analysis column 40 by the manifold 41, glycohemoglobin, which is absorbed to the column package, is desorbed.

As described above, the density of the dissolved oxygen is uniformed in the eluting solution transmitted through the deaerator 2, so that the density of the dissolved oxygen is uniformed also in the eluting solution to be supplied to the analysis column 40. As a result, in a case that hemoglobin is desorbed from the column package to be discharged from the analysis column 40 together with the eluting solution, a ratio between oxyhemoglobin and deoxyhemoglobin in hemoglobin in the separated liquid is uniformed. In addition, with respect to a plurality of blood samples 14, even in the case of measuring glycohemoglobin, the ratio between oxyhemoglobin and deoxyhemoglobin in hemoglobin in the separated liquid is uniformed mutually among different blood samples.

A desorption solution containing glycohemoglobin to be discharged from the analysis column 40 is supplied to the photometric cell 50 of the photometric unit 5 via the pipe 66. The desorption solution is introduced into the photometric cell 50 via the pipe 66 and the introduction flow channel 50A, and this desorption solution is introduced into the waste fluid tank 15 via the pipe 66 after passing through the photometric flow channel 50B and the discharge flow channel 50C.

In the photometric unit 5, when the separated liquid is passing through the photometric flow channel 50B, the separated liquid is continuously irradiated with light from the light source 51. On the other hand, the light transmitted through the photometric flow channel 50B is divided in the beam splitter 52, and then, the light is received by the light receiving system for measurement 53 and the light receiving system for reference 54. In the light receiving system for measurement 53, light of 415 nm, which is the longest absorption wavelength of oxyhemoglobin transmitted through the interference filter 53A, is selectively received in the light receiving device 53B. On the other hand, in the light receiving system for reference 54, light of 500 nm, which is a reference wavelength transmitted through the interference filter 54A, is selectively received in the light receiving device 54B.

Result of light reception of the light receiving devices 53B and 54B are outputted to an operation circuit (not illustrated), and in this operation circuit, a chromatogram of hemoglobin and a density of glycohemoglobin (a ratio of glycohemoglobin in a total amount of hemoglobin) are calculated. A calculation result of the operation circuit is displayed on a display panel (not illustrated) to be printed automatically or due to the button operation by the user.

In the HPLC apparatus X, since a ratio between oxyhemoglobin and deoxyhemoglobin of the separated liquid in one time of measurement is uniformed, it is possible to decrease incorrectness of a measurement result caused by a variation of the amount of the dissolved oxygen during measurement. In addition, also in measurement of a plurality of blood samples to be continuously carried out, since the ratio between oxyhemoglobin and deoxyhemoglobin of the separated liquid is uniformed per measurement, it becomes possible to prevent a variation in a measurement result from being generated mutually among a plurality of measurements.

Further, even in a case of opening the decompression spaces 25A, 25B, and 25C to air when driving of the deaerator 2 is stopped, the partial pressures of oxygen of the decompression spaces 25A, 25B, and 25C before stopping the apparatus are maintained in a predetermined range, and the range is not deviated from the partial pressure in air so much, so that the partial pressure of oxygen when driving the deaerator 2 again is not deviated from the partial pressure of oxygen when driving the deaerator 2 continuously so much. Therefore, at an initial stage of driving of the deaerator 2 and after driving the deaertor 2 for a predetermined time, it becomes possible to decrease a difference of the dissolved amount of a gas component included in the eluting solution (for example, the amount of the dissolved oxygen). As a result, by decreasing a measurement error between the blood sample 14 to be analyzed at the initial stage of driving of the deaerator 2 and the blood sample 14 to be analyzed after driving the deaerator 2 for a predetermined time, a degree of accuracy of measurement can be improved.

Further, the deaerator 2 may be configured in such a manner that the oxygen density measuring sensors 26A, 26B, and 26C are omitted, the valves 29A, 29B, and 29C are released per predetermined time or every time measurement of the predetermine number of samples is completed, and air is intermittently introduced to the decompression spaces 25A, 25B, and 25C.

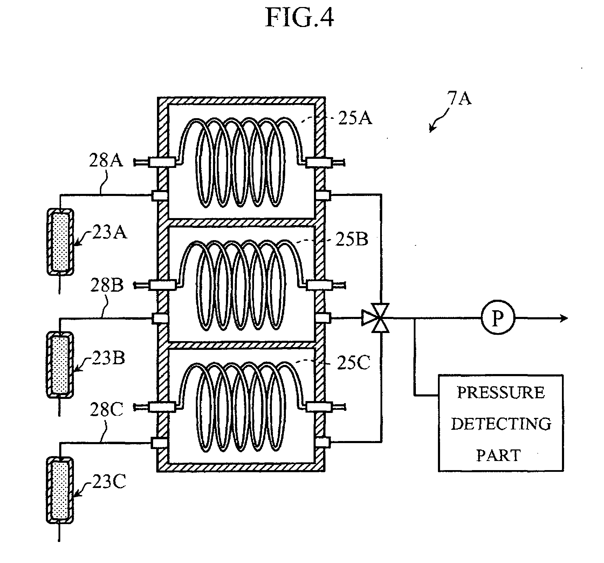

Next, a deaerator according to second to eighth embodiments of the present invention will be described with reference to Figs. 4 to 10. In the drawings to be referred below, the same member and the same element as the deaerator 2 in the first embodiment of the present invention are given the same reference numerals and signs, and the duplicated explanation is herein omitted.

In Fig. 4, a deaerator 7A according to the second embodiment of the present invention is illustrated. In the deaerator 7A, the oxygen density measuring sensors 26A, 26B, and 26C and the valves 29A, 29B, and 29C (see Fig. 2) are omitted in the deaerator 2 according to the first embodiment.

In this deaerator 7A, air is gradually and naturally introduced into the decompression spaces 25A, 25B, and 25C via the high-pressure drop parts 23A, 23B, and 23C, and the air introduction pipes 28A, 28B, and 28C. Therefore, air is always introduced into the decompression spaces 25A, 25B, and 25C, so that it is possible to prevent the partial pressure of oxygen in the decompression spaces 25A, 25B, and 25C from being increased. In addition, in the deaerator 7A, the oxygen density measuring sensors 26A, 26B, and 26C and the valves 29A, 29B, and 29C are not needed, and control of the valves 29A, 29B, and 29C (see Fig. 2) is not needed, so that the deaerator 7A has an advantage both in a manufacturing cost and a running cost.

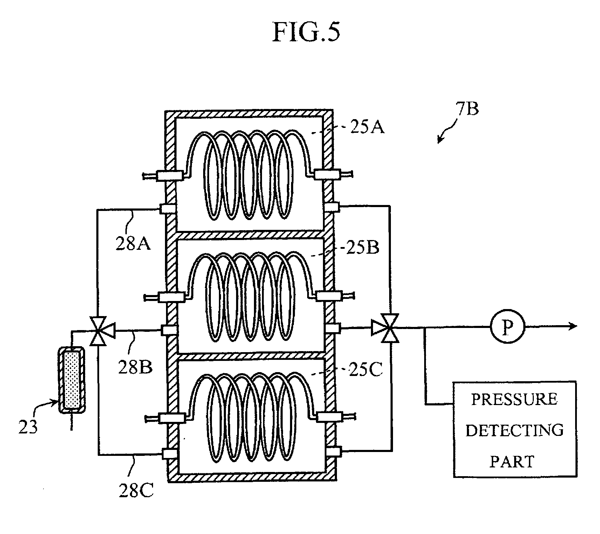

In Fig. 5, a deaerator 7B according to a third embodiment of the present invention is illustrated. In deaerator 7A (see Fig. 4) according to the second embodiment, the deaerator 7B is configured so as to give introduction resistance to air to be introduced in the decompression spaces 25A, 25B, and 25C by one high-pressure drop part 23.

Since one high-pressure drop part 23 is enough for this deaerator 7B, the deaerator 7B has a further advantage in the manufacturing cost.

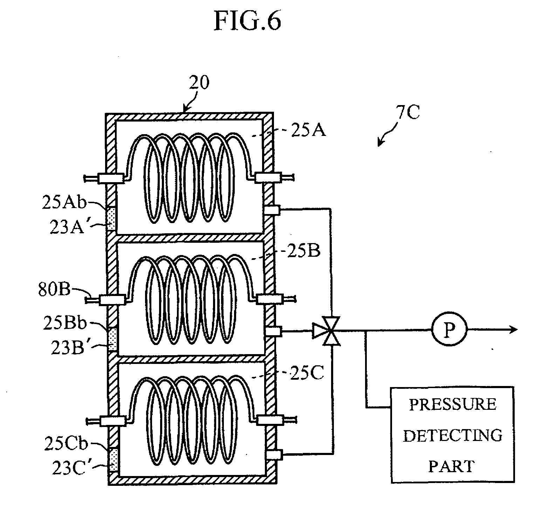

In Fig. 6, a deaerator 7C according to fourth embodiment of the present invention is shown. In the deaerator 7C, high-pressure drop parts 23A', 23B', and 23C' are arranged in the air introduction ports 25Ab, 25Bb, and 25Cb in the decompression spaces 25A, 25B, and 25C. The high-pressure drop parts 23A', 23B', and 23C' are formed by a publicly-known porous body, for example.

In this deaerator 7C, since air is gradually and naturally introduced in the decompression spaces 25A, 25B, and 25C via the high-pressure drop parts 23A', 23B', and 23C', it is possible to prevent the partial pressure of oxygen in the decompression spaces 25A, 25B, and 25C from being increased. In addition, in the deaerator 7C, the oxygen density measuring sensors 26A, 26B, and 26C, the air introduction pipes 28A, 28B, and 28C, and the valves 29A, 29B, and 29C (see Fig. 2) can be omitted, so that the deaerator 7C has an advantage both in the manufacturing cost and the running cost.

Further, in the deaerator 7C, in place of arranging the high-pressure drop parts 23A', 23B', and 23C' in the air introduction ports 25Ab, 25Bb, 25Cb, at least a part of the chamber 20 is formed in a porous form or one or a plurality of minute holes that are communicated with the decompression spaces 25A, 25B, and 25C is or are formed on a part of the chamber 20 so as to naturally introduce air into the decompression spaces 25A, 25B, and 25C. In addition, in the deaerator 7C, in place of arranging the high-pressure drop parts 23A', 23B', and 23C' in the air introduction ports 25Ab, 25Bb, 25Cb, valves are provided in the air introduction ports 25Ab, 25Bb, 25Cb so as to introduce air into the decompression spaces 25A, 25B, and 25C by opening and closing of the valves.

In the deaerator 7C, omitting the high-pressure drop part 23, and adopting a resistance tube (a pipe having a minute inner diameter (for example, Φ 0.1 to 0.2 mm) formed in a spiral shape) as the air introduction pipes 28A, 28B, and 28C, the external air introduction pipes28A, 28B, and 28C themselves may be used as a high-pressure drop part. In addition, by forming a part of the external air introduction pipe by a resistance tube, the resistance tube can be also used as the high-pressure drop part. Such a configuration to use the resistance tube can be also applied to the first to third deaerators 2, 7A, and 7B (Figs. 2, 4, and 5) according to the present invention.

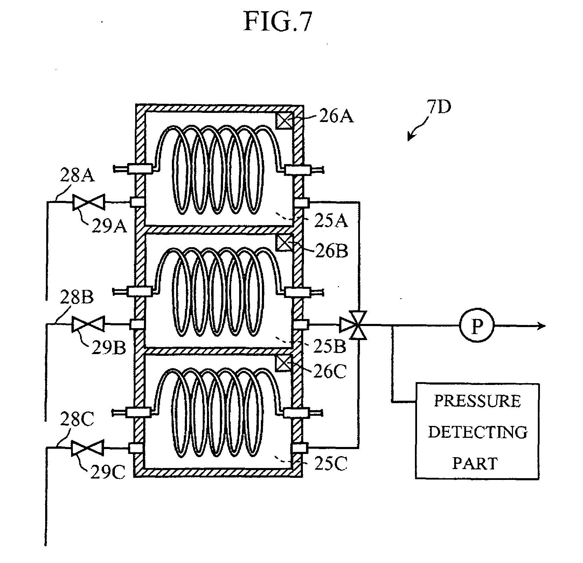

In Fig. 7, a deaerator 7D according to a fifth embodiment, which does not form part of the present invention, is shown. In the deaerator 7D, the high-pressure drop parts 23A, 23B, and 23C (see Fig. 2) are omitted in the deaerator 2 according to the first embodiment. In other words, the deaerator 2 is configured in such a manner that, monitoring a density of oxygen (a partial pressure of oxygen) of each of the decompression spaces 25A, 25B, and 25C by the oxygen density measuring sensors 26A, 26B, and 26C, when the density of oxygen (a partial pressure of oxygen) of each of the decompression spaces 25A, 25B, and 25C takes a value not less than a predetermined value, releasing the valves 29A, 29B, and 29C, air is introduced into the decompression spaces 25A, 25B, and 25C via the air introduction pipes 28A, 28B, and 28C.

According to this deaerator 7D, introducing air into the decompression spaces 25A, 25B, and 25C when the density of oxygen (the partial pressure of oxygen) of each of the decompression spaces 25A, 25B, and 25C is high, the partial pressure of oxygen can be made small (moving it closer to air). In addition, the deaerator 7D has an advantage in a manufacturing cost for omission of the high-pressure drop parts 23A, 23B, and 23C (see Fig. 2).

Further, in the deaerator 7D, omitting the oxygen density measuring sensors 26A, 26B, and 26C, and releasing the valves 29A, 29B, and 29C per predetermined time or every time measurement of the predetermined number of samples is completed, air may be intermittently introduced into the decompression spaces 25A, 25B, and 25C.

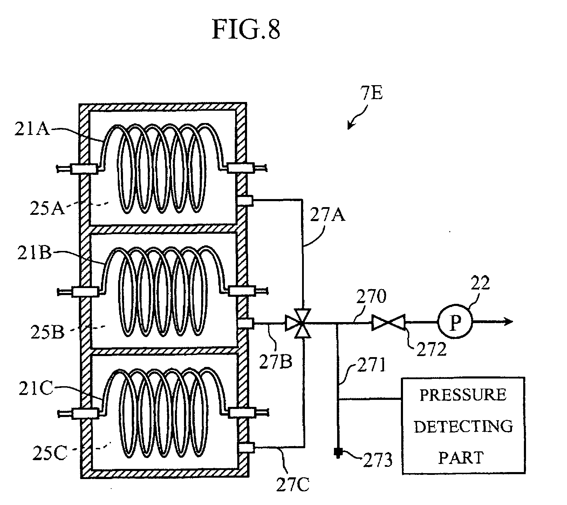

In Fig. 8, a deaerator 7E according to a sixth embodiment, which does not form part of the present invention, is shown. The deaerator 7E is different from the deaerator 2 according to the first embodiment (see Fig. 2) in means for equalizing the partial pressure of oxygen in the decompression spaces 25A, 25B, and 25C. In other words, in the deaerator 7E, the high-pressure drop parts 23A, 23B, and 23C, the oxygen density measuring sensors 26A, 26B, and 26C, the air introduction ports 25Ab, 25Bb, and 25Cb, and the air introduction pipes 28A, 28B, and 28C (see Fig. 2), which are provided in the former deaerator 2, are omitted.

On the other hand, in the deaerator 7E, it is assumed that the exhaust pipes 27A, 27B, 27C, and 270, and the detection pipe 271 have high gas permeability. As a material for the exhaust pipes 27A, 27B, 27C, and 270, and the detection pipe 271, the same quality of material as those of the gas permeable tubes 21A, 21B, and 21C, for example, a material formed of a silicon resin or polytetrafluoroethylene may be used. In addition, it is preferable that, in the detection pipe 271, a long length of the pipe is ensured and a surface area is large. Further, in the deaerator 7E, the valve 272 is provided in the middle of the exhaust pipe 270. The end portion of the detection pipe 271 is closed by an airtight stopper 273. The valve 272 is closed when driving of the deaerator 7E has been stopped, while the valve 272 is released by the control means (not illustrated) upon driving of the deaerator 7E.

In this deaerator 7E, upon driving, the inner pressures of the exhaust pipes 27A, 27B, 27C, and 270, and the detection pipe 271 are determined to be low as well as the decompression spaces 25A, 25B, and 25C, and via these pipes 27A, 27B, and 27C, 270, and 271 the gases of the decompression spaces 25A, 25B, and 25C are discharged. On the other hand, when the driving of the deaerator 7E is stopped, the valve 272 is closed, so that the pipes 27A, 27B, 27C, 270, and 271 are decompressed as well as the decompression spaces 25A, 25B, and 25C. Therefore, air is gradually introduced into the decompression spaces 25A, 25B, and 25C via the pipes 27A, 27B, 27C, 270, and 271 until the pressures of the decompression spaces 25A, 25B, and 25C have been equivalent to an air pressure. Particularly, in the case of forming the pipes 27A, 27B, 27C, 270, and 271 by a silicon resin, since oxygen transmits through the silicon resin more easily than nitrogen, air with a high ratio of oxygen is introduced into the decompression space. Therefore, it is possible to bring the partial pressures of oxygen of the decompression spaces 25A, 25B, and 25C when driving of the deaerator 7E is stopped closer to these when the deaerator 7E is driving. As a result, deviation of the partial pressure of oxygen in the decompression spaces 25A, 25B, and 25C can be made small after a predetermined time has passed when the deaerator 7E is driving and the driving of the deaerator 7E is stopped. In other words, at an initial stage of driving of the deaerator 7E and after driving the deaerator 7E for a predetermined time, it becomes possible to make the partial pressures of oxygen in the decompression spaces 25A, 25B, and 25C approximately the same. Thereby, it is possible to prevent a variation in the partial pressures of oxygen in the decompression spaces 25A, 25B, and 25C from the initial stage of driving of the deaerator 7E till a predetermined time has been passed.

In addition, in the case of using the same quality of material as those of the gas permeable tubes 21A, 21B, and 21C as the exhaust pipes 27A, 27B, 27C, and 270, and the detection pipe 271, after the operation of the deaerator 7E is stopped, it is possible to introduce external air into the decompression spaces 25A, 25B, and 25C in a state near the state when the deaerator 7E is driving. In other words, when the deaerator 7E is driving and when the deaerator 7E stops, decreasing the decompression degrees of the decompression spaces 25A, 25B, and 25C (bring the pressure closer to an air pressure) in order to mutually prevent a variation of the partial pressure of oxygen (the density of oxygen) from being increased, it is possible to prevent the eluting solution remaining within the gas permeable tubes 21A, 21B, and 21C from being condensed.

Further, in a case of using a pipe with a long pipe length as the detection pipe 271, the surface area of the detection pipe 271 can be ensured large, so that the decompression degrees of the decompression spaces 25A, 25B, and 25C after the operation of the deaerator 7E is stopped can be made small more rapidly. Thereby, it is possible to prevent the eluting solution remaining within the gas permeable tubes 21A, 21B, and 21C from being condensed.

Further, in the deaerator 7E, the valve 272 may be intermittently closed during driving of the deaerator 7E continuously. In this case, monitoring the density of oxygen (the partial pressure of oxygen) of each of the decompression spaces 25A, 25B, and 25C, the valve 272 may be closed when the density of oxygen (the partial pressure of oxygen) exceeds a predetermined threshold or per predetermined time.

In addition, the detection pipe 271 is not necessarily closed by the airtight stopper 273, and for example, by connecting a part of the detection pipe 271, air tightness of the interior of the detection pipe 271 may be maintained.

Further, in the deaerator 7E, omitting the valve 272 provided in the middle of the exhaust pipe 270, and using a check valve owned by the decompression pump 22, air tightness of the interior of the exhaust pipe 270 may be ensured when stopping the driving of the deaerator 7E (the decompression pump 22).

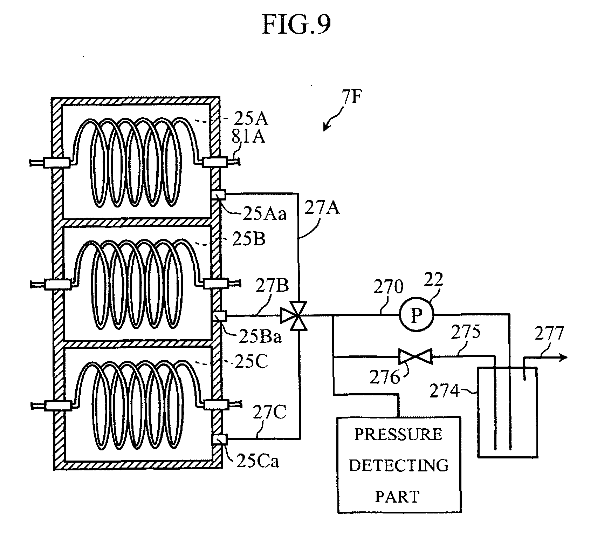

In Fig. 9, a deaerator 7F according to a seventh embodiment, which does not form part of the present invention, is illustrated. The deaerator 7F is configured so as to decrease a difference of the partial pressure of oxygen in the decompression spaces 25A, 25B, and 25C between the initial state of driving and after driving for a predetermined time as with the deaerator 7E (see Fig. 8) according to the sixth embodiment.

More specifically the deaerator 7F is provided with a discharge sub-chamber 274 for holding a deaeration gas from the discharge ports 25Aa, 25Ba, and 25Ca and the exhaust pipes 27A, 27B, 27C, and 270; a return pipe 275 for returning the deaeration gas of the discharge sub-chamber 274 into the decompression spaces 25A, 25B, and 25C; a valve 276, which is provided in the middle of the return pipe 275; and an air opening pipe 277. The valve 276 is released after deaeration, while the valve 276 is closed upon deaeration by the control means (not illustrated).

In this deaerator 7F, the valve 276 is closed upon deaeration, so that gases of the decompression spaces 25A, 25B, and 25C are introduced into the discharge sub-chamber 274 via the exhaust pipes 27A, 27B, 27C, and 270, and the gas of the discharge sub-chamber 274 is discharged to air via the air opening pipe 277. On the other hand, when the valve 276 is released after completion of deaeration, the deaeraion gas of the discharge sub-chamber 274 is introduced into the decompression spaces 25A, 25B, and 25C via the return pipe 275. Here, the deaeration gas of the discharge sub-chamber 274 has the densities of oxygen (the partial pressures of oxygen) similar to those of the decompression spaces 25A, 25B, and 25C. Therefore, the deaeration gas of the discharge sub-chamber 274 is returned to the decompression spaces 25A, 25B, and 25C after completion of deaeration, a difference of the partial pressure of oxygen in the decompression spaces 25A, 25B, and 25C between the initial state of driving and after driving for a predetermined time can be small.

Further, in the deaerator 7F, during continuous driving of the deaerator 7F, the valve 276 may be released intermittently. In this case, monitoring a density of oxygen (a partial pressure of oxygen) of each of the decompression spaces 25A, 25B, and 25C, when the density of oxygen (the partial pressure of oxygen) exceeds a predetermined threshold or per predetermined time, the valve 276 may be closed.

In the deaerator 7F, an air opening valve may be provided in the air opening pipe 277, or the air opening valve may be provided in an air opening port, to which the air opening pipe 277 in the discharge sub-chamber 274 is connected. This air opening valve is controlled to be opened and closed, for example, linked to turning on and off of the decompression pump 22. In other words, while the air opening valve is released when the decompression pump 22 is driving, the air opening valve is closed when the decompression pump 22 is not driven. According to this configuration, no air is introduced into the discharge sub-chamber 274 when the decompression pump 22 is not driven, and the degree of decompression of each of the decompression spaces 25A, 25B, and 25C is decreased only by the gas of the discharge sub-chamber 274. Therefore, it is possible to make a difference of a partial pressure of oxygen in the decompression spaces 25A, 25B, and 25C between the initial state of driving of the deaerator 7F and after driving for a predetermined time further smaller. It is obvious that the same advantage as the case of providing the air opening valve can be obtained even if the deaerator 7F is configured so as to prevent or limit introduction of air into the discharge sub-chamber 274 when the decompression pump 22 is not driven by using a device other than the air opening valve, for example, a check valve, the high-pressure drop parts 23A, 23B, 23C, 23, 23A', 23B', and 23C' of the deaerators 2, 7A, 7B, and 7C (Fig. 2, and Figs. 4 to 6), which are described previously, and their modified examples.

Further, in the deaerator 7F, omitting the return pipe for returning 275, and using the exhaust pipes 27A, 27B, 27C, and 270, the deaeration gas of the discharge sub-chamber 274 may be returned to the decompression spaces 25A, 25B, and 25C.

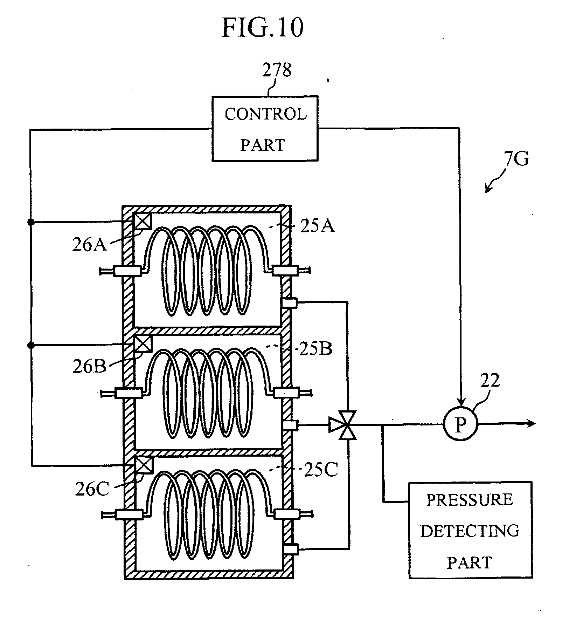

In Fig. 10, a deaerator 7G according to an eighth embodiment of the present invention is illustrated. The deaerator 7G is configured so as to control the operation of the decompression pump 22 based on a measurement result of a density of oxygen (a partial pressure of oxygen) in the oxygen density measuring sensors 26A, 26B, and 26C, which are provided in the decompression spaces 25A, 25B, and 25C. More specifically, the deaerator 7G is configured so as to control the decompression pump 22 by a control part 278 in the case that the density of oxygen (the partial pressure of oxygen) to be measured by the oxygen density measuring sensors 26A, 26B, and 26C exceeds a predetermined value and increase the degree of decompression of each of the decompression spaces 25A, 25B, and 25C.

In such a deaerator 7G, even when the partial pressure of oxygen of each of the decompression spaces 25A, 25B, and 25C is increased, by increasing the degree of decompression in each of the decompression spaces 25A, 25B, and 25C, a deaeration performance can be maintained constant.

Various modifications are possible for the present invention in addition to the embodiments described above. For example, not limited to the HPLC apparatus for measuring a density of glycohemoglobin in blood, the present invention can be applied to a case of using the sample other than blood, a case of measuring a component other than the density of glycohemoglobin, or a liquid chromatography apparatus other than the HPLC apparatus.

Not limited to the liquid chromatography apparatus, the deaerator according to the present invention can be also used as a deaerator to be utilized for inhibited oxidation or preventing of development of microorganisms in a manufacturing process of food and drinking water or the like.

### EXAMPLES

Hereinafter, change in a measurement value of a density of glycohemoglobin when the deaerator is continuously driving was considered.

### (First Example)

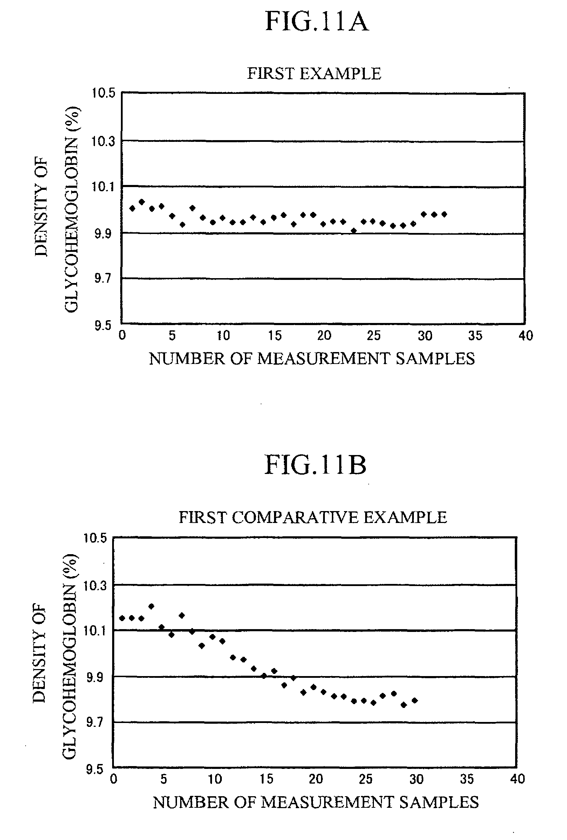

According to the present example, by using a glycohemoglobin measuring apparatus adopting the deaerator 7E according to the sixth embodiment of the present invention (see Fig. 8), a density of glycohemoglobin in a whole blood was continuously measured. As a glycohemoglobin measuring apparatus, one obtained by improving the deaerator in "ADAMS A1c HA-8160" (manufactured by ARKRAY, Inc.) into the deaerator 7E configured as shown in Fig. 8 was used. In the deaerator 7F, the valve 272 provided in the middle of the exhaust pipes 27A, 27B, 27C, and 270 was omitted. In addition, before start of measurement for the present example, in the improved glycohemoglobin measuring apparatus, the deaerator 7E was stopped continuously measuring glycohemoglobin with respect to the predetermined number of samples, and then, introducing external air from the exhaust pipes 27A, 27B, 27C, and 270, and the detection pipe 271 into the decompression spaces 25A, 25B, and 25C, a degree of decompression of each of the decompression spaces 25A, 25B, and 25C was made small. A time for stopping the deaerator 7E was determined as about twelve hours. As a sample, a whole blood collected from patients of diabetes was used. A measurement result of glycohemoglobin is illustrated in Fig. 11A.

### (First Comparative Example)

According to the present comparative example, in a manner similar to the first example, the density of glycohemoglobin in the whole blood was continuously measured except for use of the deaerator having an air opening valve provided in place of the airtight stopper 273 while the valve 272 was omitted in the deaerator 7E. However, before measuring the density of glycohemoglobin for the present comparative example, while releasing the air opening valve and opening the decompression spaces 25A, 25B, and 25C to air, the air opening valve was closed during measurement of the density of glycohemoglobin. A measurement result of glycohemoglobin is illustrated in Fig. 11B.

As can be seen from Figs. 11A and 11B, in the first comparative example, while the measurement value is lowered as the more the number of the measurement samples is increased, in the first example, the initial measurement value is smaller than that of the first comparative example. However, even if the number of the measurement samples is increased, the measurement value is approximately fixed and stabilized. From this result, in the case of opening the decompression space to air after the deaerator is continuously driven, while the measurement value is varied if no action is taken, if a variation in a density of oxygen (a partial pressure of oxygen) in each of the decompression spaces 25A, 25B, and 25C is prevented so as to stabilize the degree of deaeration of the eluting solution in the deaerator and equalizing the density of the dissolved oxygen in the eluting solution, even when the deaerator is continuously driven, it is perceived that a degree of accuracy in measurement can be improved preventing a variation in the measurement value.

## Claims

1. A deaerator (2) comprising:
a liquid distribution space;
a decompression space (25A, 25B, 25C);
a gas permeable film (21A, 21B, 21C) to partition these spaces; and
a pump (22) for discharging a gas in the decompression space to the outside;
wherein the deaerator further comprises gas partial pressure variation control means for controlling a variation in a partial pressure of a specific gas in the decompression space wherein
the gas partial pressure variation control means is oxygen partial pressure variation control means for controlling a variation in a partial pressure of oxygen in the decompression space (25A, 25B, 25C),
wherein the oxygen partial pressure variation control means is configured so as to introduce a gas in the exterior of the deaerator into the decompression space (25A, 25B, 25C) during deaeration
**characterised in that** the oxygen partial pressure variation control means has a high-pressure drop part (23) for increasing transfer resistance of the gas to be introduced in the decompression space (25A, 25B, 25C), the high-pressure drop part (23) serving to absorb a difference between an air pressure and the pressure of the decompression spaces (25A, 25B, 25C), wherein the high-pressure drop part (23) includes a porous filter (23Ab, 23Bb, 23Cb).

2. The deaerator (2) according to Claim 1,
wherein the oxygen partial pressure variation control means further has an external air introduction port to communicate the decompression space with the outside of the deaerator, and an external-air introduction pipe, which is connected to the external air introduction port;
wherein the high-pressure drop part (23) is provided in the middle or the end portion of the external air introduction pipe (28A, 28B, 28C).

3. The deaerator (2) according to Claim 2,
wherein the oxygen partial pressure variation control means has an oxygen partial pressure detecting part (26A, 26B, 26C) for monitoring a partial pressure of oxygen of the decompression space, and a valve, which is provided in the middle of the external air introduction pipe(28A, 28B, 28C); and
the oxygen partial pressure variation control means is configured so as to control an opening and closing state of the valve based on a monitoring result by the oxygen partial pressure detecting part (26A, 268, 26C).

4. The deaerator (2) according to Claim 1,
wherein the oxygen partial pressure variation control means is configured so as to open the decompression space to air in the exterior of the deaerator when the pump (22) is not driven, while opening the decompression space to air in the exterior of the deaerator when the pump (22) is driving only in a case that a predetermined condition is satisfied.

5. The deaerator (2) according to Claim 4,
wherein the oxygen partial pressure variation control means is configured so as to open the decompression space (25A, 25B, 25C) to air in the exterior of the deaerator per predetermined time or when a partial pressure of an oxygen gas in the decompression space takes a value not less than a predetermined value.

6. The deaerator (2) according to Claim 1,
wherein the oxygen partial pressure variation control means is configured so as to increase a degree of decompression of the decompression space (25A, 258, 25C) when a partial pressure of an oxygen gas in the decompression space (25A, 258, 25C) takes a value not less than a predetermined value.

7. A liquid chromatography apparatus (X) comprising:
a column (40) holding a column package;
one or a plurality of eluting solution holding parts (10, 11, 12) holding an eluting solution to be supplied to the column; and
a deaerator (2) according to one of the preceding claims for deaerating the eluting solution during supply of the eluting solution from the eluting solution holding part to the column.

8. The liquid chromatography apparatus according to Claim 7,
wherein the liquid chromatography apparatus is configured so as to measure glycohemoglobin in a blood sample.

## Patentansprüche

1. Entlüfter (2), mit:
einem Flüssigkeitsverteilungsraum;
einem Dekompressionsraum (25A, 25B, 25C);
einer gasdurchlässigen Folie (21A, 21B, 21C), um diese Räume zu teilen; und
einer Pumpe (22) zum Entladen von Gas in dem Dekompressionsraum nach Außen;
wobei der Entlüfter ferner ein Gaspartialdruckveränderungssteuermittel zum Steuern einer Veränderung eines Partialdrucks eines spezifischen Gases in dem Dekompressionsraum aufweist,
wobei das Gaspartialdruckveränderungssteuermittel ferner ein Sauerstoffpartialdruckveränderungssteuermittel zum Steuern einer Veränderung in einem Partialdruck von Sauerstoff in dem Dekompressionsraum (25A, 25B, 25C) aufweist,
wobei das Sauerstoffpartialdruckveränderungssteuermittel eingerichtet ist, um während des Entlüftens ein Gas von der Außenseite des Entlüfters in den Dekompressionsraum (25A, 25B, 25C) einzuführen,
**dadurch gekennzeichnet, dass** das Sauerstoffpartialdruckveränderungssteuermittel ein Hochdruckabfallteil (23) zum Erhöhen des Durchgangswiderstands des in den Dekompressionsraum (25A, 25B, 25C) einzuführenden Gases aufweist, wobei das Hochdruckabfallteil (23) dazu dient, eine Differenz zwischen einem Luftdruck und dem Druck der Dekompressionsräume (25A 25B, 25C) aufzunehmen und das Hochdruckabfallteil (23) einen porösen Filter (23Ab, 23Bb, 23Cb) aufweist.

2. Entlüfter (2) nach Anspruch 1,
bei dem das Sauerstoffpartialdruckveränderungssteuermittel ferner eine Außenlufteinlassöffnung aufweist, um den Dekompressionsraum mit der Außenseite des Entlüfters zu verbinden, und ein Außenlufteinführrohr, das mit der Außenlufteinlassöffnung verbunden ist;
wobei das Hochdruckabfallteil (23) in dem mittleren oder dem Endabschnitt des Außenlufteinführrohrs (28A, 28B, 28C) bereitgestellt ist.

3. Entlüfter (2) nach Anspruch 2,
bei dem das Sauerstoffpartialdruckveränderungssteuermittel ein Sauerstoffpartialdruckerfassungsteil (26A, 26B, 26C) zum Überwachen eines Sauerstoffpartialdrucks des Dekompressionsraums aufweist und ein Ventil, das in der Mitte des Außenlufteinführrohrs (28A, 28B, 28C) bereitgestellt ist; und
das Sauerstoffpartialdruckveränderungssteuermittel eingerichtet ist, einen Öffnungs- und Schließzustand des Ventils basierend auf einem Überwachungsergebnis durch das Sauerstoffpartialdruckerfassungsteil (26A, 26B, 26C) zu regeln.

4. Entlüfter (2) nach Anspruch 1,
bei dem das Sauerstoffpartialdruckveränderungssteuermittel eingerichtet ist, den Dekompressionsraum für Luft von der Außenseite des Entlüfters zu öffnen, wenn die Pumpe (22) nicht angetrieben wird, wobei der Dekompressionsraum, wenn die Pumpe (22) läuft, nur in dem Fall für Luft von der Außenseite des Entlüfters geöffnet wird, dass ein festgelegter Zustand erfüllt ist.

5. Entlüfter (2) nach Anspruch 4,
bei dem das Sauerstoffpartialdruckveränderungssteuermittel eingerichtet ist, den Dekompressionsraum (25A, 25B, 25C) für Luft von der Außenseite des Entlüfters zu einer vorbestimmten Zeit zu öffnen oder wenn ein Partialdruck eines Sauerstoffgases in dem Dekompressionsraum einen Wert annimmt, der nicht weniger als ein vorbestimmter Wert ist.

6. Entlüfter (2) nach Anspruch 1,
bei dem das Sauerstoffpartialdruckveränderungssteuermittel eingerichtet ist, einen Dekompressionsgrad des Dekompressionsraums (25A, 25B, 25C) zu erhöhen, wenn ein Partialdruck eines Sauerstoffgases in dem Dekompressionsraum (25A, 25B, 25C) einen Wert annimmt, der nicht weniger als ein vorbestimmter Wert ist.

7. Flüssigkeitschromatographievorrichtung (X), mit:
einer Säule (40), die ein Säulenpacket hält;
einem oder einer Vielzahl von Eluentaufnahmeteilen (10, 11, 12), die einen der Säule zuzuführenden Eluenten aufnimmt; und
einem Entlüfter (2) nach einem der vorstehenden Ansprüche zum Entlüften des Eluents beim Zuführen des Eluents von dem Eluentaufnahmeteil zu der Säule.

8. Flüssigkeitschromatographievorrichtung nach Anspruch 7,
wobei die Flüssigkeitschromatographievorrichtung eingerichtet ist, Glykohämoglobin in einer Blutprobe zu messen.

## Revendications

1. Dégazeur (2) comprenant :
un espace de distribution de liquide ;
un espace de décompression (25A, 25B, 25C) ;
un film perméable au gaz (2 1 A, 2 1 B, 21 C) pour séparer ces espaces ; et
une pompe (22) pour évacuer un gaz dans l'espace de décompression à l'extérieur ;
dans lequel le dégazeur comprend en outre des moyens de contrôle de variation de pression partielle de gaz pour contrôler une variation de pression partielle d'un gaz spécifique dans l'espace de décompression
dans lequel les moyens de contrôle de variation de pression partielle de gaz sont des moyens de contrôle de variation de pression partielle d'oxygène pour contrôler une variation de pression partielle d'oxygène dans l'espace de décompression (25A, 25B, 25C),
dans lequel les moyens de contrôle de variation de pression partielle d'oxygène sont configurés de manière à introduire un gaz à l'extérieur du dégazeur dans l'espace de décompression (25A, 25B, 25C) pendant le dégazage
**caractérisé en ce que** les moyens de contrôle de variation de pression partielle d'oxygène ont une partie de chute de haute pression (23) pour augmenter la résistance de transfert du gaz à introduire dans l'espace de décompression (25A, 25B, 25C), la partie de chute de haute pression (23) servant à absorber une différence entre une pression d'air et la pression des espaces de décompression (25A, 25B, 25C), dans lequel la partie de chute de haute pression (23) comprend un filtre poreux (23Ab, 23Bb, 23Cb).

2. Dégazeur (2) selon la revendication 1,
dans lequel les moyens de contrôle de variation de pression partielle d'oxygène ont en outre un orifice d'introduction d'air externe pour faire communiquer l'espace de décompression avec l'extérieur du dégazeur, et un tuyau d'introduction d'air externe, qui est raccordé à l'orifice d'introduction d'air externe ;
dans lequel la partie de chute de haute pression (23) est disposée dans la portion centrale ou d'extrémité du tuyau d'introduction d'air externe (28A, 28B, 28C).

3. Dégazeur (2) selon la revendication 2,
dans lequel les moyens de contrôle de variation de pression partielle d'oxygène ont une partie de détection de pression partielle d'oxygène (26A, 26B, 26C) pour surveiller une pression partielle d'oxygène de l'espace de décompression, et une valve, qui est disposée au milieu du tuyau d'introduction d'air externe (28A, 28B, 28C) ; et
les moyens de contrôle de variation de pression partielle d'oxygène sont configurés de manière à contrôler un état d'ouverture et de fermeture de la valve sur la base d'un résultat de surveillance par la partie de détection de pression partielle d'oxygène (26A, 26B, 26C).

4. Dégazeur (2) selon la revendication 1,
dans lequel les moyens de contrôle de variation de pression partielle d'oxygène sont configurés de manière à ouvrir l'espace de décompression à l'air à l'extérieur du dégazeur lorsque la pompe (22) n'est pas entrainée, tout en ouvrant l'espace de décompression à l'air à l'extérieur du dégazeur lorsque la pompe (22) est entraînée uniquement dans un cas dans lequel une condition prédéterminée est satisfaite.

5. Dégazeur (2) selon la revendication 4,
dans lequel les moyens de contrôle de variation de pression partielle d'oxygène sont configurés de manière à ouvrir l'espace de décompression (25A, 25B, 25C) à l'air à l'extérieur du dégazeur à un temps prédéterminé ou lorsqu'une pression partielle d'un gaz d'oxygène dans l'espace de décompression prend une valeur non inférieure à une valeur prédéterminée.

6. Dégazeur (2) selon la revendication 1,
dans lequel les moyens de contrôle de variation de pression partielle d'oxygène sont configurés de manière à augmenter un degré de décompression de l'espace de décompression (25A, 25B, 25C) lorsqu'une pression partielle d'un gaz d'oxygène dans l'espace de décompression (25A, 25B, 25C) prend une valeur non inférieure à une valeur prédéterminée.

7. Appareil de chromatographie en phase liquide (X) comprenant :
une colonne (40) contenant une phase de remplissage de colonne ;
un ou une pluralité de parties contenant une solution d'élution (10, 11, 12) contenant une solution d'élution à alimenter vers la colonne ; et
un dégazeur (2) selon l'une des revendications précédentes pour dégazer la solution d'élution pendant l'alimentation de la solution d'élution depuis la partie contenant une solution d'élution vers la colonne.

8. Appareil de chromatographie en phase liquide selon la revendication 7,
dans lequel l'appareil de chromatographie en phase liquide est configuré de manière à mesurer la glycohémoglobine dans un échantillon de sang.
